Europäisches Patentamt

European Patent Office

Office européen des brevets

(19)

(11) Veröffentlichungsnummer: **0 280 862**

**A2**

## (12) EUROPÄISCHE PATENTANMELDUNG

(21) Anmeldenummer: **88100862.7**

(22) Anmeldetag: **21.01.88**

(51) Int. Cl.⁴: **B23B 41/02**

(30) Priorität: **05.03.87 DE 3707022**

(43) Veröffentlichungstag der Anmeldung:
**07.09.88 Patentblatt 88/36**

(84) Benannte Vertragsstaaten:
**AT BE CH DE FR GB IT LI LU NL SE**

(71) Anmelder: **TBT Tiefbohrtechnik GmbH und Co. KG.**
**Siemensstrasse 1**
**D-7433 Dettingen(DE)**

(72) Erfinder: **Weiblen, Richard**
**Birkenweg 42**
**D-7420 Münsingen-Dottingen(DE)**

(74) Vertreter: **Dreiss, Uwe, Dr. jur. Dipl.-Ing. M.Sc. et al**
**Patentanwälte Dreiss, Hosenthien & Fuhlendorf Gerokstrasse 6**
**D-7000 Stuttgart 1(DE)**

(54) **Führungseinrichtung für ein Tiefbohrwerkzeug.**

(57) Bei Führungseinrichtung für ein Tiefbohrwerkzeug (1) in einer Tiefbohrmaschine mit einer den Schaft (2) des Tiefbohrwerkzeuges zumindest teilweise umfassenden Führungsfläche wird durch mindestens eine verdrehbare mit ihrer Drehachse senkrecht zur Längserstreckung des Teifbohrwerkzeugs (1) angeordnete Führungsbacke (31,32,131) gebildet. Die Außenfläche (51) der Führungsbacke weist zumindest entlang eines Teils ihres Umfangs eine in Umfangsrichtung laufende Nut (60,61,161) mit halbkreisförmigem Querschnitt aufweist, wobei der Durchmesser des Halbkreises sich in Umfangsrichtung ändert. Dadurch wird eine Führungsfläche (43) mit von der Drehstellung der Führungsbacke (31,32,131) abhängigem Halbkreisdurchmesser für den tangential an der Halbkreisfläche der Nut (60,61,161) anliegenden Schaft (2) des Tiefbohrwerkzeuges gebildet.

Fig. 4b

Xerox Copy Centre

EP 0 280 862 A2

## Führungseinrichtung für ein Tiefbohrwerkzeug

Die Erfindung betrifft eine Führungseinrichtung für ein Tiefbohrwerkzeug in einer Tiefbohrmaschine, mit einer den Schaft des Tiefbohrwerkzeuges zumindest teilweise umfassenden Führungsfläche.

Ein Tiefbohrwerkzeug weist im allgemeinen einen relativ langen Schaft oder Rohr auf, der bzw. das zumindest während des Anbohrens und während des Bohrens geführt geführt werden muß, um Schwingungen des Werkzeuges und/oder ein Auswandern der Bohrung zu vermeiden. Diesem Zweck dienen bekannte Führungseinrichtungen der eingangs genannten Art, sog. "Lünetten". Sie sind zwischen dem Drehspindelkasten und Werkstück angeordnet. Sie werden im wesentlichen durch eine Buchse gebildet, in der der Schaft bzw. das Rohr während des Bohrens geführt ist. Zum Einbringen des Schaftes bzw. des Rohres eines Tiefbohrwerkzeuges ist die Buchse und ihre Halterung mesit zweiteilig ausgebildet und aufklappbar.

Nachteilig an einer derartigen Anordnung ist, daß die Länge der Lünette einschließlich der Länge des Schlittens, auf der sie angeordnet ist, am Tiefbohrwerkzeug zusätzlich zur Länge der Bohrung, die gebohrt werden soll, vorgesehen werden muß. Bei vorgegebener Länge der Bohrung erhöht dies sowohl die Baulänge der gesamten Tiefbohrmaschine als auch die Länge des erforderlichen Tiefbohrwerkzeuges. Außerdem ist die Montage bzw. Demontage der Lünette zum Einbringen bzw. Herausnehmen des Schaftes umständlich und eignet sich nicht für einen automatischen Werkzeugwechsel. Nachteilig ist ferner, daß zum Einlegen von Tiefbohrwerkzeugen mit verschiedenen Schaftdurchmessern in Lünetten verschiedene Buchsendurchmesser vorgesehen werden müssen.

Aufgabe der Erfindung ist es, eine Führungseinrichtung der eingangs genannten Art so auszubilden, daß dabei möglichst einfach mit verschiedenen Durchmessern des Schaftes eines Tiefbohrwerkzeuges gearbeitet werden kann. Dabei soll die Führungseinrichtung zur Verwendung in einer CNC-gesteuerten Werkzeugmaschine geeignet sein. Ferner soll möglichst vermieden werden, daß die Führungseinrichtung zusätzliche Länge des Tiefbohrwerkzeuges und der Tiefbohrmaschine bedingt.

Diese Aufgabe wird dadurch gelöst, daß die Führungseinrichtung durch mindestens eine verdrehbare mit ihrer Drehachse senkrecht zur Längserstreckung des Tiefbohrwerkzeugs angeordnete Führungsbacke gebildet wird, deren Außenfläche zumindest entlang eines Teils ihres Umfangs eine in Umfangsrichtung verlaufende Nut mit halbkreisförmigem Querschnitt aufweist, wobei der Durchmesser des Halbkreises sich in Umfangsrichtung ändert und eine Führungsfläche mit von der Drehstellung der Führungsbacke abhängigem Halbkreisdurchmesser für den tangential an der Halbkreisfläche der Nut anliegenden Schaft des Tiefbohrwerkzeuges bildet.

Es ergibt sich also, daß durch eine einfache Drehung der Führungsbacken die Führungsfläche verschiedenen Durchmessern des Schaftes angepaßt werden kann. Die Drehung der Führungsbacke ist auf besonders einfache Weise (bspw. durch Ansteuerung mit einem Schrittmotor o.dgl.) an die Erfordernisse einer automatisch gesteuerten (CNC-gesteuerten) Werkzeugmaschine anpaßbar.

Eine vorteilhafte Weiterbildung der Erfindung sieht vor, daß die Führungseinrichtung durch zwei Führungsbacken gebildet wird, deren Außenflächen an einer Stelle aneinander anliegen und je eine Nut aufweisen, wobei die Nuten an der Stelle des aneinander liegens der Außenflächen der Führungsbacken zusammen eine Führungsöffnung mit in Abhängigkeit von der Drehstellung der Führungsbacken unterschiedlichen Durchmesser bilden.

Auf diese Weise wird der Schaft voll umfasst, so daß die Führung weiter verbessert wird. Auch bei dieser Weiterbildung der Erfindung ist durch verschiedene Drehstellungen der Führungsbacken zueinander die dadurch gebildete Einheit auch für verschiedene Durchmesser des Schaftes des Tiefbohrwerkzeuges anpaßbar.

Gemäß einer weiteren vorteilhaften Weiterbildung ist vorgesehen, daß die Außenflächen der Führungsbacken in einer bestimmten Drehstellung zusammen eine weitere in Richtung des Tiefbohrwerkzeugs verlaufende und mit diesem koaxiale Öffnung aufweisen, durch die sich der Spannzylinder, der das Tiefbohrwerkzeug aufnimmt, hindurch erstrecken kann. Auf diese Weise kann die volle Länge des Tiefbohrwerkzeuges in der letzten Bohrphase zum Einsatz kommen, ohne daß der zwischen Bohrbuchsenträger und Spindel der Tiefbohrmaschine angeordnete und die Führungseinrichtung tragende Schlitten es verhindert, daß man praktisch mit dem Spannzylinder voll an das Werkzeug heranfahren kann.

Eine weitere vorteilhafte Weiterbildung sieht vor, daß die Außenflächen der Führungsbacken in einer weiteren bestimmten Drehstellung zusammen eine nach oben offene und nach unten durch Prall- und Dämpfungsflächen abgeschlossene Ausnehmung zur Aufnahme des Bohrkopfes des Tiefbohrwerkzeuges aufweisen. In dieser Position kann das Tiefbohrwerkzeug bei automatischem Werkzeugwechsel eingelegt werden, wobei das Auftreffen des Bohrkopfes auf die genannten Prall-und Dämpfungsflächen ein Schwingen und damit eine Beschädigung des Bohrkopfes verhindern.

Durch geeignete Stellmittel muß, soweit zwei Führungsbacken verwendet werden, dafür gesorgt sein, daß die beiden Führungsbacken jeweils miteinander synchron so gedreht werden, daß jeweils die einander zuzuordnenden Halbkreisquerschnitte der Nuten in den Außenflächen auch sich an der Stelle befinden, an der die Außenflächen der Führungsbacken aneinander anliegen. Zu diesem Zweck kann vorgesehen sein, daß beide Führungsbacken je mit einem Zahnrad versehen sind, wobei die beiden Zahnräder sich miteinander im Eingriff befinden und mindestens eines davon mit einem Stellmotor gekoppelt ist.

Es ist ferner vorteilhafterweise vorgesehen, daß die Führungsbacken aus einem Kunststoff mit Lagereigenschaften, vorzugsweise aus Polyoxymethylen, gebildet sind. Eine weitere vorteilhafte Weiterbildung der Erfindung sieht vor, daß die beiden Führungsbacken über ein gemeinsames Stellelement drehverstellbar sind, wobei dies entweder durch eine Welle mit zwei Schneckentrieben, eine Zahnstange oder ein Hebelgestänge gebildet werden kann.

Bei besonders schwierigen Führungsaufgaben an einer Tiefbohrmaschine, also u.a. bei besonders langen Tiefbohrwerkzeugen, sind vorteilhafterweise zwei je durch zwei Führungsbacken gebildete Einheiten hintereinander angeordnet.

Es ist aber auch möglich, bei zwei-oder mehrspindligen Tiefbohrmaschinen Einheiten, die jeweils durch zwei Führungsbacken gebildet sind, auf einer Platte nebeneinander anzuordnen.

Eine weitere vorteilhafte Weiterbildung der Erfindung sieht vor, daß eine Führungseinheit durch zwei Führungsbacken gebildet wird, die in einer vertikalen Fläche und je auf einer Welle angeordnet sind, wobei eine Welle aus der Arbeitsposition für den manuellen Werkzeugwechsel wegklappbar ist.

Ein vorteilhaftes Verfahren zum Betrieb einer durch zwei miteinander zusammenwirkende Führungsbacken gebildeten Führungseinrichtung ist dadurch gekennzeichnet, daß an beiden Führungsbacken bei eingelegtem Schaft eines Tiefbohrwerkzeuges in der Drehrichtung, die eine Verkleinerung des Durchmesser der Führungsöffnung ergibt, ein bestimmtes einstellbares Drehmoment wirksam ist, das eine vorbestimmte Reibung zwischen Schaft und Führungsfläche ergibt, die geeignet ist, Torsionsschwingung des Tiefbohrwerkzeuges zu verhindern.

Die Erfindung ist bei allen Tiefbohrverfahren BTA-Verfahren, Einlippenbohrverfahren, Ejektorverfahren, sowie auch bei überlangen Spiralbohrern, Bohrstangen o.ä. anwendbar.

Ausführungsbeispiele der Erfindung und ihrer vorteilhaften Weiterbildungen werden im folgenden anhand der beigefügten Zeichnungen näher erläutert. Es stellen dar:

Figur 1 eine Tiefbohrmaschine mit Tiefbohrwerkzeug und Führungseinrichtung nach dem Stande der Technik;

Figur 2 und 3 Vorderansicht bzw. Draufsicht auf eine Führungseinrichtung gemäß einem Ausführungsbeispiel;

Figur 4a bis 4c verschiedene Arbeitsstellungen der Führungseinrichtung nach Fig. 2 und 3;

Figur 5a, 5b, 5c Schnitte durch die nebeneinanderliegenden Führungsbacken 31, 32 in den Stellungen nach Fig. 4a, 4b, 4c;

Figuren 6a bis 6e Querschnitte entlang der Linien VIa-IVa, VIb-VIb, VIc-VIc, VId-VId und VIe-VIe in Fig. 3;

Figur 7a bis 7c verschiedene Stellungen der Tiefbohrmaschine mit der Führungseinrichtung für das Teifbohrwerkzeug, entsprechend Fig. 4a bis 4c, 5a bis 5c und 6a bis 6c;

Figur 8a,b,c verschiedene Möglichkeiten zur Verstellung der die Führungsbacken tragenden Zahnräder bzw. Führungsbacken direkt;

Figur 9 die Hintereinanderschaltung zweier Führungseinrichtungen;

Figur 10 die Parallelschaltung mehrerer Führungseinrichtungen;

Figur 11 die vertikale Anordnung mehrerer Führungseinrichtungen;

Figur 12 ein weiteres Ausführungsbeispiel.

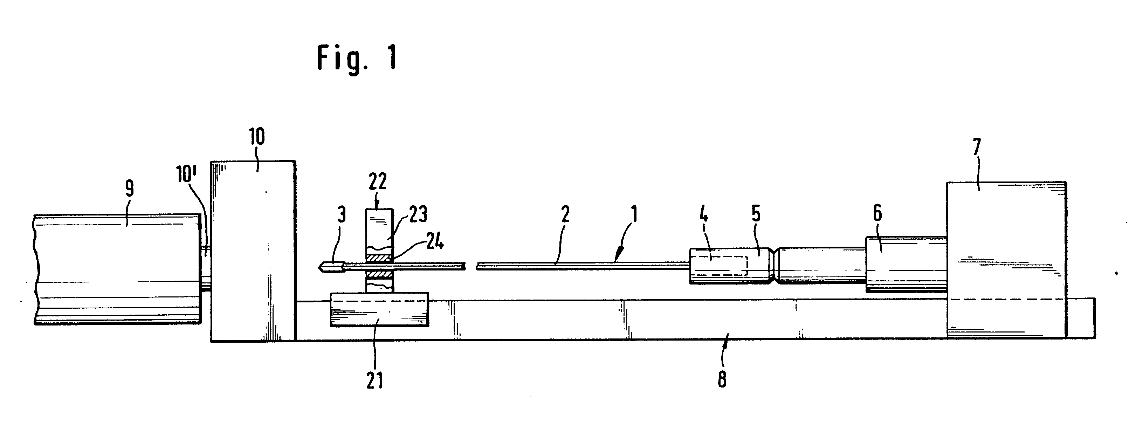

Figur 1 zeigt eine Tiefbohrmaschine nach dem Stande der Technik. Dabei wird ein sog. "Einlippen-Tiefbohrwerkzeug dargestellt. Entsprechendes gilt auch für andere Tiefbohrverfahren und -maschinen. Das Tiefbohrwerkzeug 1 besteht aus einem mit einem Innenkanal versehenen und im Querschnitt V-förmigen Schaft 2 mit einem Bohrkopf 3 am einen Ende und einem zylindrischen Einspannschaft 4 am anderen Ende. Der Einspannschaft 4 ist in einem Spannzylinder 5 aufgenommen, der seinerseits in der Drehspindel 6 aufgenommen ist. Diese Drehspindel 6 ist in einem Drehspindelkasten 7 angeordnet und wird von einem (nicht gezeigten) Motor angetrieben. Der Drehspindelkasten 7 mit der Drehspindel 6 ist auf dem Maschinenbett 8, das in Form entsprechender Führungen ausgebildet ist, derart verschiebbar, daß das Tiefbohrwerkzeug 1 in Richtung auf das Werkstück 9 verschoben werden kann. Das Werkstück 9 ist auf einer (nicht gezeigten) Aufnahmefläche anfgespannt oder gehalten. 10 ist der Bohrbuchsenträger (bzw.bei BTA-Verfahren) der Bohrölzuführapparat ; 10' ist die Anbohrbuchse.

Um den Schaft 2 zu führen bzw. abzustützen, ist auf einem Schlitten 21 eine Führungseinrichtung, eine sog. Lünette 22, vorgesehen. Es handelt sich dabei um eine in eine Halterung 23 eingepasste oder gelagerte Buchse 24, deren Innendurchmesser dem Durchmesser des zylindrischen Teils des Schaftes 2 entspricht, so daß letzterer sich in oder mit dieser Buchse 24 drehen kann und dabei präzise geführt wird.

Eine eingangs erwähnte Schwierigkeit besteht darin, daß die durch Drehspindel 6, Drehspindelkasten 7 und Tiefbohrwerkzeug 1 gebildete Einheit nur soweit nach links auf das Werkstück 9 hin verschoben werden kann, bei der Spannzylinder 5 auf die rechte Seite der Lünette 22 auftrifft. Die weitere Länge des Tiefbohrwerkzeuges 1 bleibt ungenutzt. Eine weitere Schwierigkeit besteht darin, daß beim Werkzeugwechsel die Lünette 22 erst entsprechend demontiert werden muß. Diese Lünnetten z.B. sind dazu als zwei miteinander an einer Seite gelenkig verbundene Halbschalen ausgebildet, von denen eine nach Lösen einer Befestigungsschraube hochgeklappt werden kann. Diese Vorgang ist jedoch zur Automation ungeeignet. Es ist zudem erforderlich, für jeden Durchmesser eines Schaftes 2 eine separate Buchse 24 einzusetzen. Beim Einbringen des Tiefbohrwerkzeuges 1 in die in Fig. 1 gezeigte Position mittels eines Greifers einer automatischen Werkzeug-Wechseleinrichtung kann das Ende des Tiefbohrwerkzeuges 1 - schwingen und beim Einführen in die nach oben offene Führung beschädigt werden.

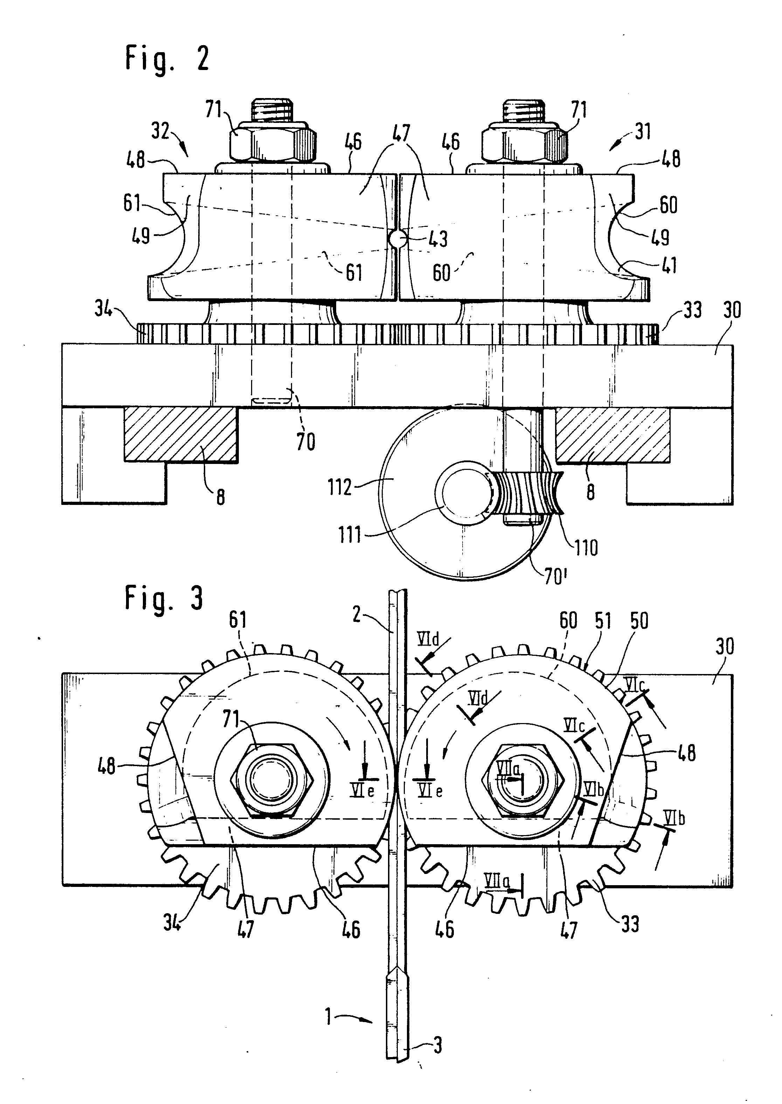

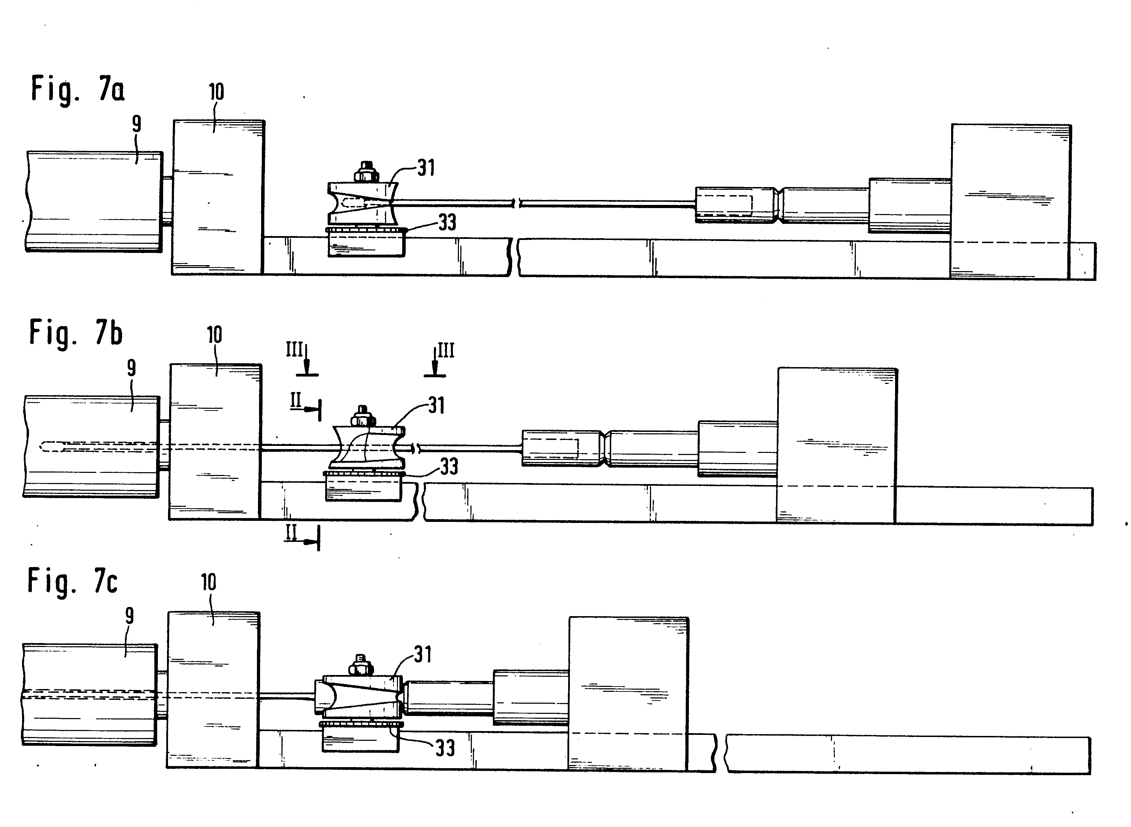

Figur 2 und Figur 3 zeigen ein Ausführungsbeispiel einer erfindungsgemäßen Führungseinrichtung für ein Tiefbohrwerkzeug, und zwar entsprechend den Ansichten II-II und III-III von Fig. 7b. Diese Führungseinrichtung weist die im vorstehenden Absatz erwähnten Nachteile nicht auf.

Die Führungseinrichtung wird durch eine Grundplatte 30 gebildet, auf der drehbar zwei Führungsbacken 31 und 32 angeordnet sind. Mit den beiden Führungsbacken sind zwei Zahnräder 33 bzw. 34 fest verbunden, die sich miteinander in Eingriff befinden, so daß eine Drehung des einen Zahnrads und der damit verbundenen Führungsbacke immer eine Drehung des anderen Zahnrads mit der damit verbundenen Führungsbacke, und zwar im entgegengesetzten Drehsinn, bedingt (vgl. die eingezeichneten Pfeile in Fig. 3). Insofern ist gewährleistet, daß einer bestimmten Drehstellung der Einführungsbacke jeweils eine ganz bestimmte Drehstellung der anderen Führungsbacke entspricht. Der Antrieb der Führungsbacken 31, 32 erfolgt über einen Schrittmotor (nicht gezeigt), der an einem der Zahnräder 33, 34 angreift und von der CNC-Steuerung der Tiefbohrmaschine angesteuert wird.

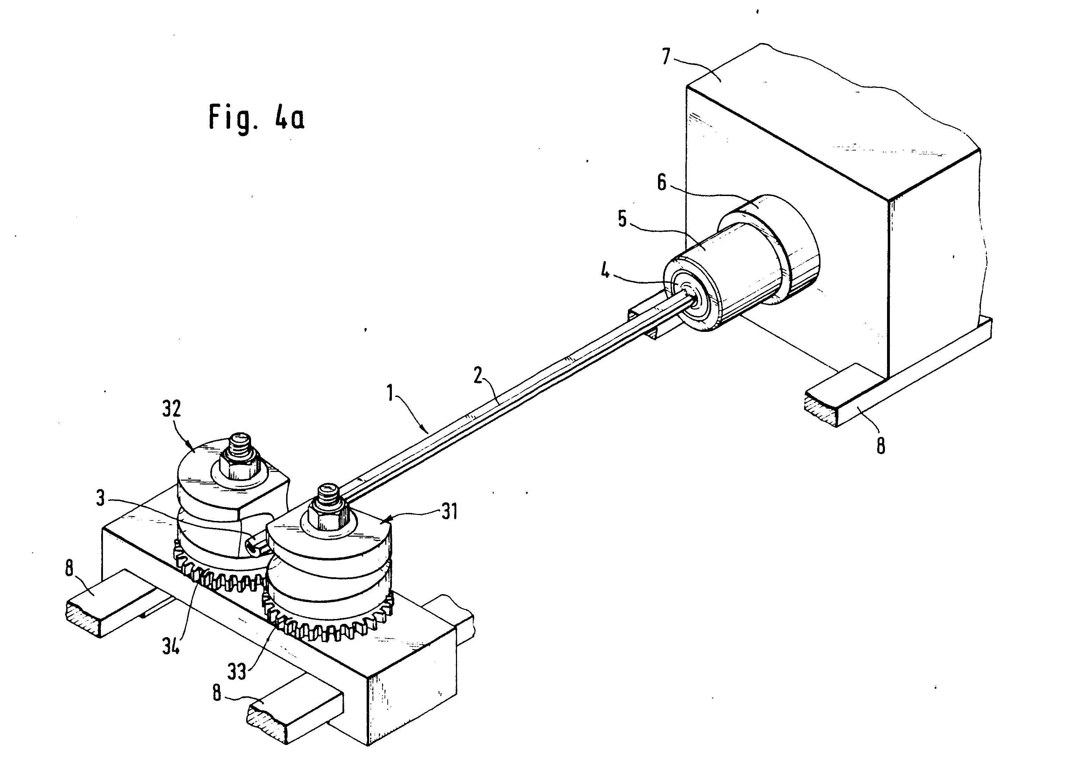

Bevor die Geometrie der Führungsbacken näher beschrieben wird, sei kurz auf die verschiedenen Funktionen eingegangen, die in den Figuren 4a bis 4b dargestellt sind, weil sich anhand dieser Funktionen dann auch die zugeordnete Geometrie der Führungsbacken ergibt:

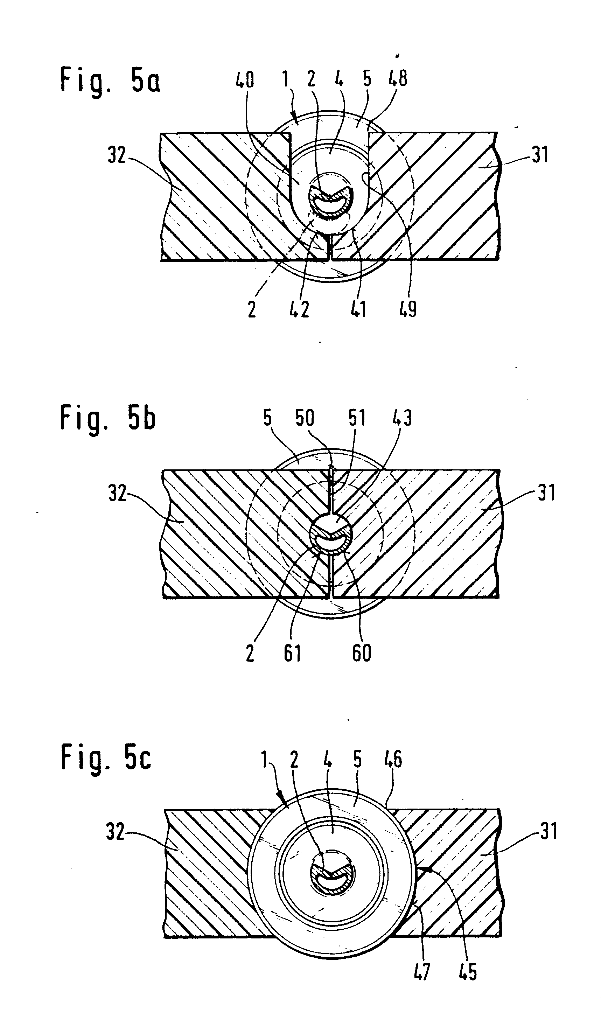

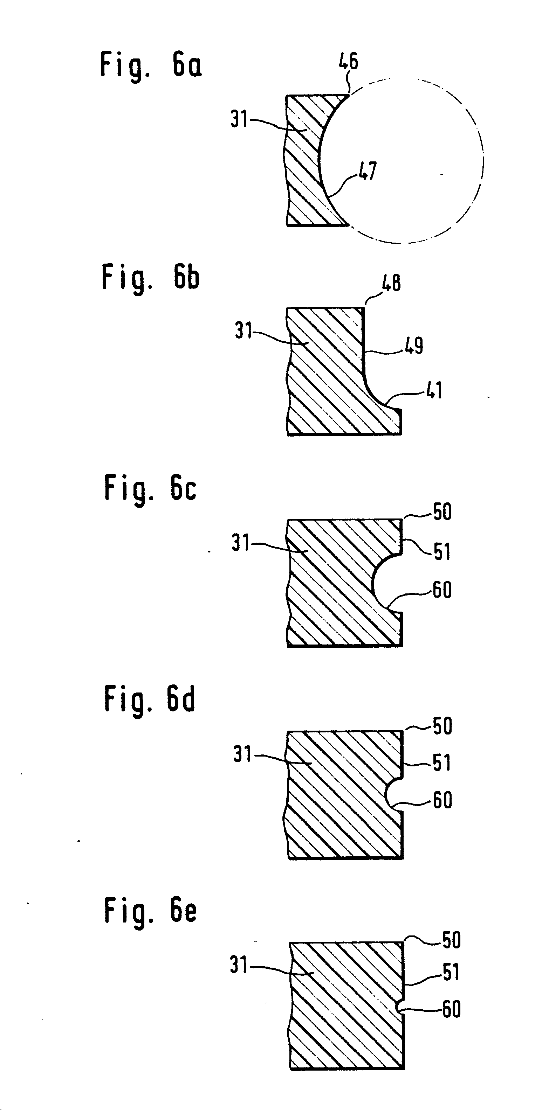

Figur 4a (vgl. auch Fig. 5a und 6a) zeigt, zum Einbringen des Tiefbohrwerkzeuges 1 zwischen den beiden Führungsbacken 31 und 32 in einer ersten bestimmten Drehstellung eine im Querschnitt U-förmige nach oben offene Ausnehmung 40, deren unterer Bereich durch die im Querschnitt viertelkreisförmigen Dämpfungs-bzw. Prallflächen 41, 42 gebildet wird. Das Einbringen erfolgt durch eine automatische Werkzeugwechseleinrichtung, z.B. gemäß DE-PS 33 38 239.

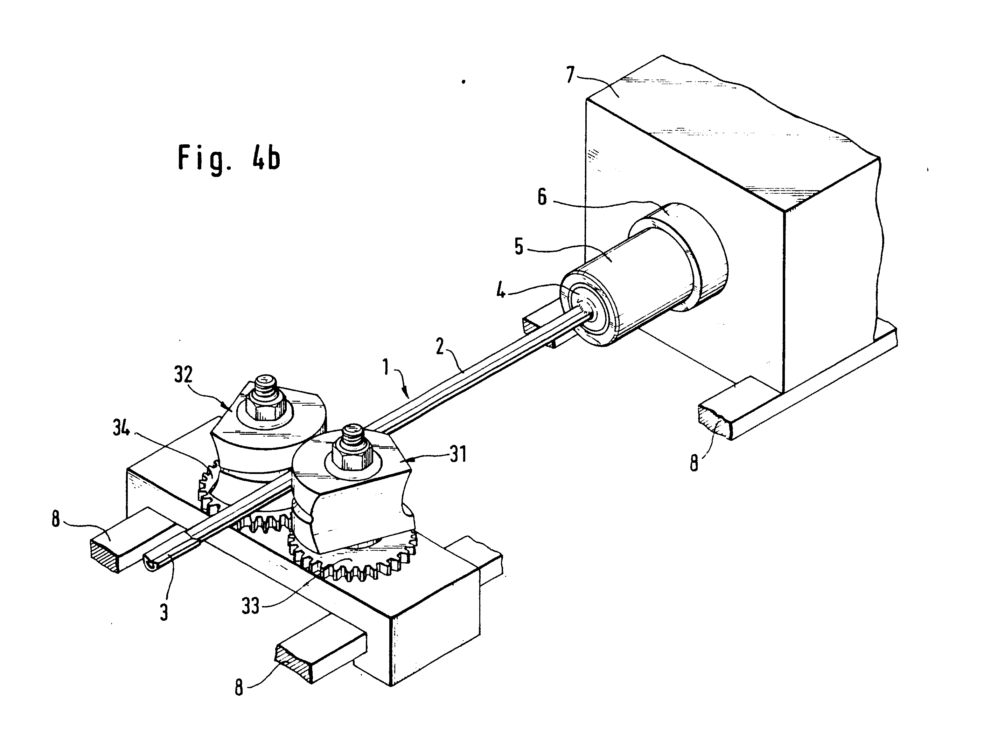

Nach dem Einbringen des Tiefbohrwerkzeuges 1 gemäß Fig. 4a werden die Führungsbacken 31, 32 gedreht und das Tiefbohrwerkzeug 1 in Richtung auf das Werkstück 9 bewegt, und zwar derart, daß sich die Situation nach Fig. 4b, 5b, 7b ergibt, bei der der Schaft 2 zwischen den beiden Führungsbacken 31 und 32 in einer kreisrunden und dem Durchmesser des Schaftes angepassten Führungsöffnung 43 befindet. In dieser Position dient die Führungseinrichtung als "Lünette", d.h. dazu, ein Ausfedern oder Schwingen des Schaftes 2 zu verhindern. Um diese Aufgabe wirksam erfüllen zu können, ist das Kunststoffmaterial, aus dem die Führungsbacken 31, 32 gefertigt sind, entsprechend mit geeigneten Schmier-und Laufeigenschaften ausgestattet, z.B. ein Polyoxymethylen mit guter mechanischer, thermischer und chemischer Beständigkeit. Ein solcher Lagerwerkstoff ist unter der Marke "Delrin" (eing. Warenzeichen) erhältlich.

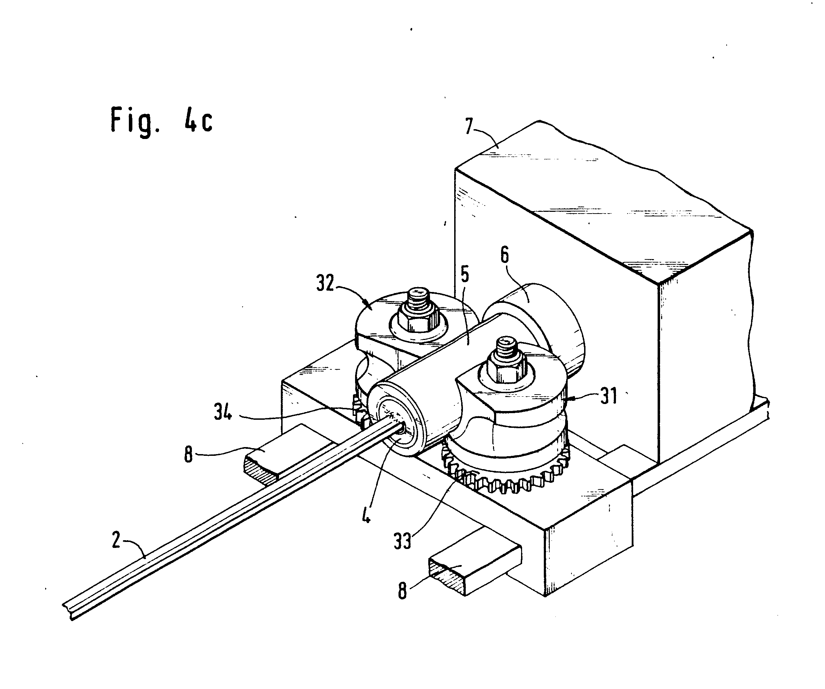

Ist nun das Bohren soweit fortgeschritten, daß der Spannzylinder 5 auf die Lünette 22 auftreffen würde, dann werden die Führungsbacken 31 und 32 erneut verdreht, so daß sie die in Fig. 4c, 5c und 7c gezeigte Stellung zueinander einnehmen. Sie definieren zwischen sich eine weitere kreisrunde Führungsöffnung 45, die groß genug ist, um den Spannzylinder 5 frei "hindurchzulassen". Die Führungsöffnung 45 ist also im Querschnitt mindestens so groß, daß der Spannzylinder 5 hindurchtreten kann. Dann wird der Spannzylinder in der Führungsöffnung 45 geführt. Die Führungsöffnung 45 kann jedoch auch größer sein.

Damit die Führungsbacken 31 und 32 die anhand von Fig. 4, 5 und 7 erläuterten Funktionen erfüllen, sind sie so ausgebildet, wie sich das im einzelnen aus Fig. 6 ergibt. Fig. 6a bis 6e zeigen verschiedene Profile der Außenflächen 51 der Führungsbacken 31, 32. Dabei handelt es sich um zumindest teilweise entlang des Umfanges der Führungsbacken zylindrische Außenflächen 51.

Die Führungsbacke 31 weist auf ihrer Oberfläche (siehe Fig. 3) zunächst eine gerade verlaufende Kante 46 auf. Von dieser Kante wölbt sich die Fläche 47, die im Querschnitt runde Fläche 47 nach unten. Sie ergibt mit der Fläche 47 der anderen Führungsbacke die teilweise runde Führungsöffnung 45 für den Spannzylinder 5. In der Draufsicht nach Fig. 3 schließt sich an die Kante 46 die ebenfalls gerade verlaufende Kante 48 an. Von dieser ausgehend ergibt sich zunächst ein senkrechter Einschnitt entlang einer geraden Fläche 49, die in die viertelkreisförmige Dämpfungs-oder Prallflächen 41 übergeht. An die Kante 48 schließt sich dann (in der Draufsicht) eine kreisrunde Kante 50 an, von der aus sich die zylindrische Außenfläche 51 erstreckt. In diese zylindrische Außenfläche der Führungsbacke 31 ist ringsum umlaufend eine Nut 60 (bzw. 61) eingeschnitten, deren Querschnitt halbkreisförmig ist. Liegen die Führungsbacken 31, 32 an einer Stelle aneinander an, so ergänzen sich die halbkreisförmigen Nuten 60 und 61 der Führungsbacken 31 und 32 so, daß sie miteinander eine Führungsöffnung 43 ergeben, deren Querschnitt kreisförmig ist. Derart ergibt sich in den Drehstellungen, in den die Nuten 60,61 aneinander an und sich gegenüber liegen, jeweils eine, Führungsöffnung 43. Sie umschließt den Schaft 2.

Die im Querschnitt halbkreisförmigen Nuten 60, 61 in den zylindrischen Außenflächen 51 der Führungsbacken 31, 32 umlaufen, verändern entlang des Umfanges ihren Durchmesser, wie am besten durch Vergleich der Fig. 6c, 6d und 6e, sowie deren Lage in Fig. 3, ersichtlich. Je nach Drehstellung der Führungsbacken 31 und 32 zueinander ergibt sich eine Führungsöffnung 43 mit unterschiedlichem Durchmesser. Der Durchmesser der Führungsöffnung 43 kann also durch Drehung der Führungsbacken auf verschiedene Schaftdurchmesser eines Schaftes 2 eines Tiefbohrwerkzeuges 1 eingestellt werden. Dabei wird im allgemeinen das Maß des Durchmessers der Führungsöffnung 43 als Stellgröße vorgegeben. Die Führungsbacken 31, 32 werden solange gedreht, bis der Durchmesser erreicht ist. Es ist auch möglich, die Führungsbacken mit einem vorgegebenen Drehmoment zu drehen, bis sie mit einer definierten Kraft am Schaft 2 anliegen. Die entstehende Reibung kann zur Dämpfung von Torsionsschwingungen genutzt werden, insbesondere bei einem runden Schaft, wie er beim sog. BTA-Verfahren oder beim Ejektorverfahren Anwendung findet. Die Dämpfung kann dann durch das Drehmoment, das auf die Führungsbacken einwirkt, beeinflußt werden und zwar auch während des Bohrvorganges. Damit wird während des Betriebs eine Optimierung möglich.

Zusammenfassend ergibt sich als: Die zylindrischen Außenflächen 51 der Führungsbacken 31, 32 weisen in Umfangsrichtung Nuten 60,61 mit sich in Umfangsrichtung änderndem halbkreisförmigen Querschnitt auf. In Drehstellungen, in denen die Nuten aneinanderliegen, ergeben sie Führungsöffnungen 43. In einer ersten bestimmten Drehstellung ergibt sich infolge eines Einschnittes (Gerade 46, Fläche 47) in jeder Führungsbacke zwischen diesen eine zweite Führungsöffnung 45 für den Spannzylinder 5. In einer zweiten weiteren Drehstellung ergibt sich infolge eines weiteren Einschnittes (Gerade 48, Fläche 49, Flächen 41, 42) jeder Führungsfläche zwischen diesen eine oben offene Ausnehmung 40. Die Flächen gehen ineinander über. Die Ausnehmung 40 hat zur Hauptrichtung der Führungsöffnung 45 einen Winkel von etwas mehr als 90° (vgl. Kanten 46, 48, in Fig. 3). Die zylindrische Außenflächen 51 nimmt etwa die Hälfte des Umfanges ein.

In Fig. 5a sind die beiden Führungsbacken 31 und 32 derart zueinander gestellt, daß ihre Kanten 48 bw. ihre Flächen 49 einander gegenüber und zueinander parallel liegen. (Vgl. Fig. 4a). Das ist die Position, in der das Tiefbohrwerkzeug 1 derart eingelegt werden kann, daß der Bohrkopf 3 in die im Querschnitt U-förmige Ausnehmung 40 einschwingen kann.

Figur 7b zeigt eine von vielen möglichen Drehstellungen, in der die halbkreisförmigen Nuten 60, 61 aneinander anliegen und sich gegenüber liegen, so daß sie sich zu der im Querschnitt kreisrunden Führungsöffnung 45 ergänzen, deren Durchmesser von der Drehstellung abhängt. In dieser Stellung wird der Schaft 2 in der Führungsöffnung 43 geführt. Vgl. Fig. 4b und 5b.

In Fig. 7c liegen die kreisrund gewölbten Flächen 47 einander gegenüber, so daß zwischen ihnen der Spannzylinder 5 aufgenommen und geführt wird. Vgl. auch Fig. 4c und 5c.

Aus Fig. 2 ist das Zusammenwirken der Grundplatte 30 mit der Führung des Maschinenbettes 8 ersichtlich ist. Dies ist bekannt und bedarf daher keiner weiteren Erläuterung. Die Führung ist im Prinzip so wie die Führung der bekannten Lünetten 22 auf einer Schlittenführung. Ferner ist noch aus Fig. 2 ersehen, daß die Führungsbacken 31 bzw. 32 auf Zapfen 70 bzw. 70' aufgesetzt sind, die einteilig mit den Zahnrädern 33, 34 ausgebildet und an ihrem oberen Ende mit einem Gewinde versehen sind, auf das Muttern 71 aufgeschraubt sind. Der Zapfen 70' steht über Zahnrad 110 und Ritzel III mit einem Stellmotor 112 in Verbindung, der an der Platte 30 angeflanscht ist.

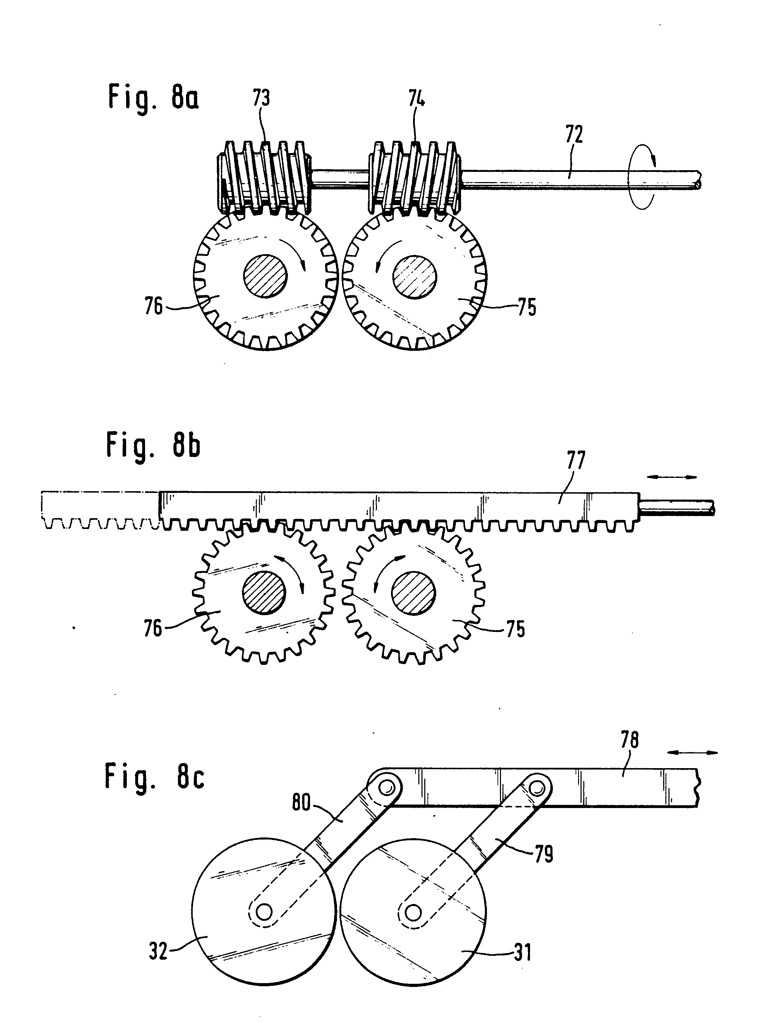

In Figur 2 ist gezeigt, daß der Antrieb der beiden Führungsbacken 31, 32 über miteinander im Eingriff befindliche Zahnräder 33, 34 erfolgt. Es sind jedoch auch andere Antriebsachsen möglich, so z.B. nach Fig. 8a mittels einer Schneckenwelle 72 mit zwei gegenläufigen Schneckentrieben 73, 74, die Zahnräder 75, 76 antreiben, auf denen die Führungsbacken (in Fig. 2 nicht dargestellt) angeordnet sind. In Figur 8b erfolgt der Antrieb der beiden Zahnräder 75, 76 über eine Zahnstange 77.

Dabei drehen sich beide Zahnräder im gleichen Drehsinn. Diese macht es dann erforderlich, daß auch die Nuten 60, 61 entsprechend gleichlaufend sich erweiternd bzw. verjüngend ausgebildet sind, damit sie sich in den jeweiligen Stellungen der Zahnstange 77 an den Berührungstellen der Führungsbacken entsprechend Figur 4, 5, 7 ergänzen. Dasselbe gilt für den Antrieb der Führungsbacken 31, 32 nach Figur 8c, der über ein Hebelgestänge erfolgt, das durch die Drehhebel 79, 80 und die Steuerstange 78 gebildet wird.

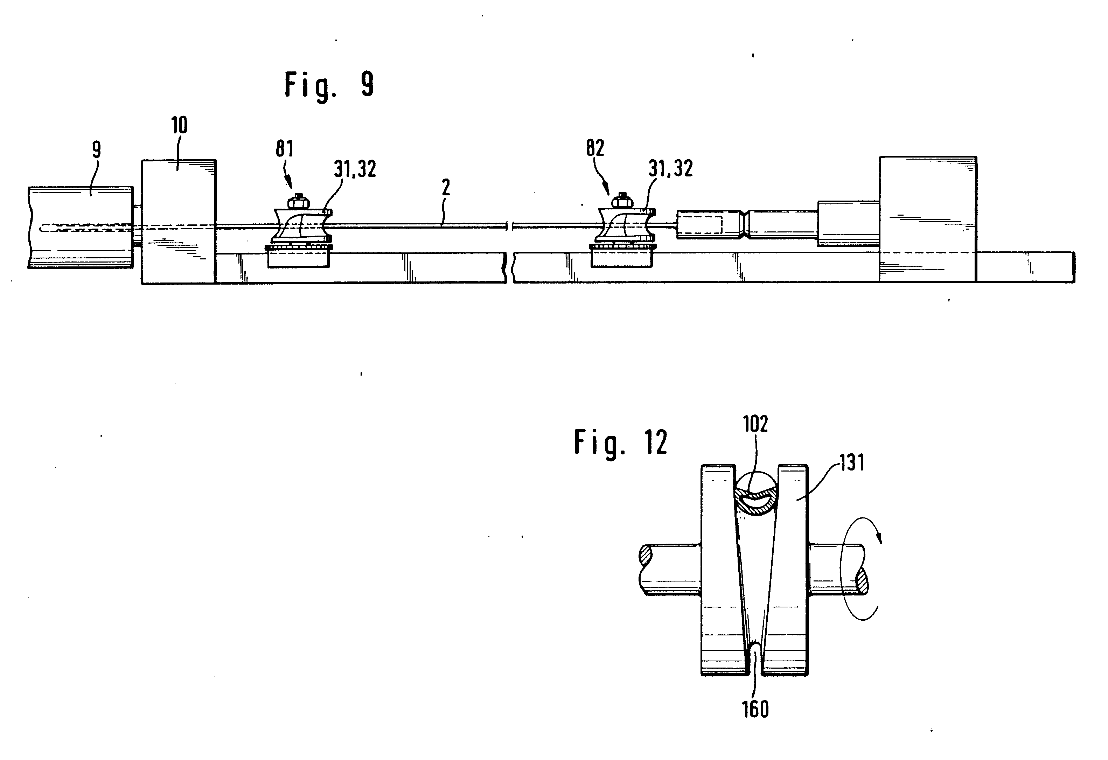

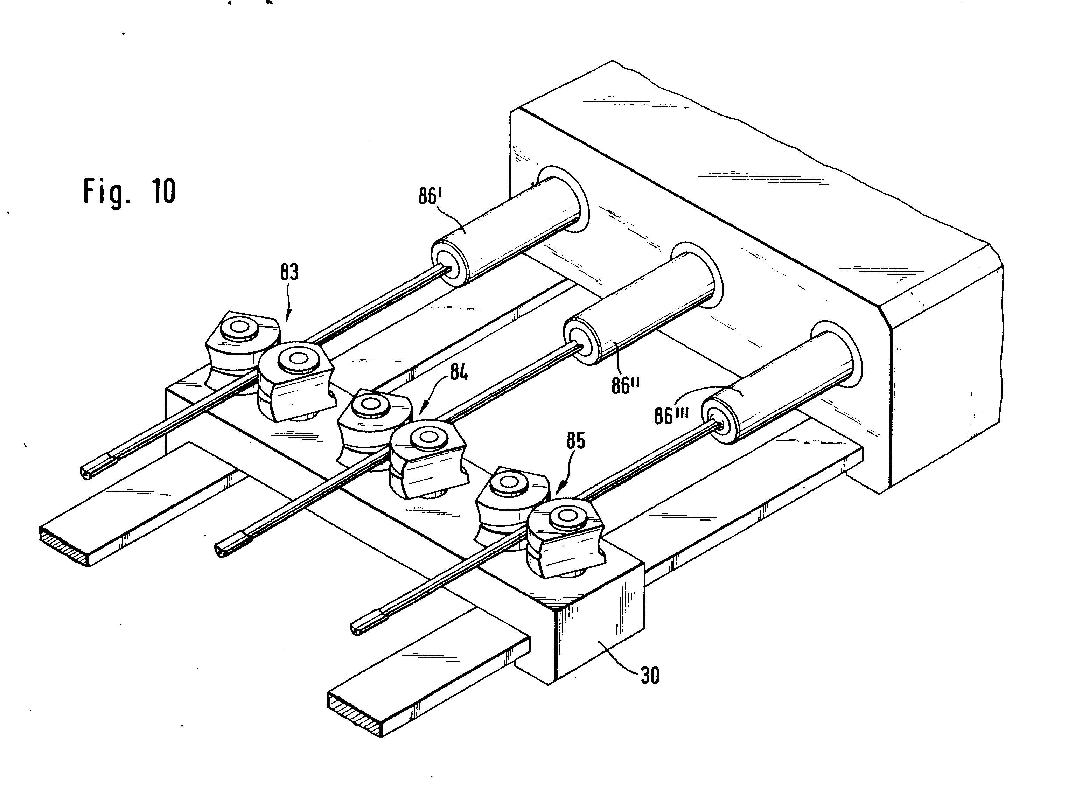

Figur 9 zeigt zwei je durch Führungsbacken 32, 32 gebildete Führungseinheiten 81, 82, die hintereinander angeordnet sind. Diese ist bei sehr langen Werkzeugen erforderlich. Figur 10 zeigt - schematisch die Anordnung von drei Führungseinheiten 83, 84, 85 nebeneinander bei einer Tiefbohrmaschine mit drei nebeneinander angeordneten Drehspindeln 86', 86'', 86'''. Man kann dabei vorsehen, daß die Führungseinheiten getrennt einstellbar sind, so daß Tiefbohrwerkzeuge mit unterschiedlichen Bohrdurchmessern zum Einsatz kommen können.

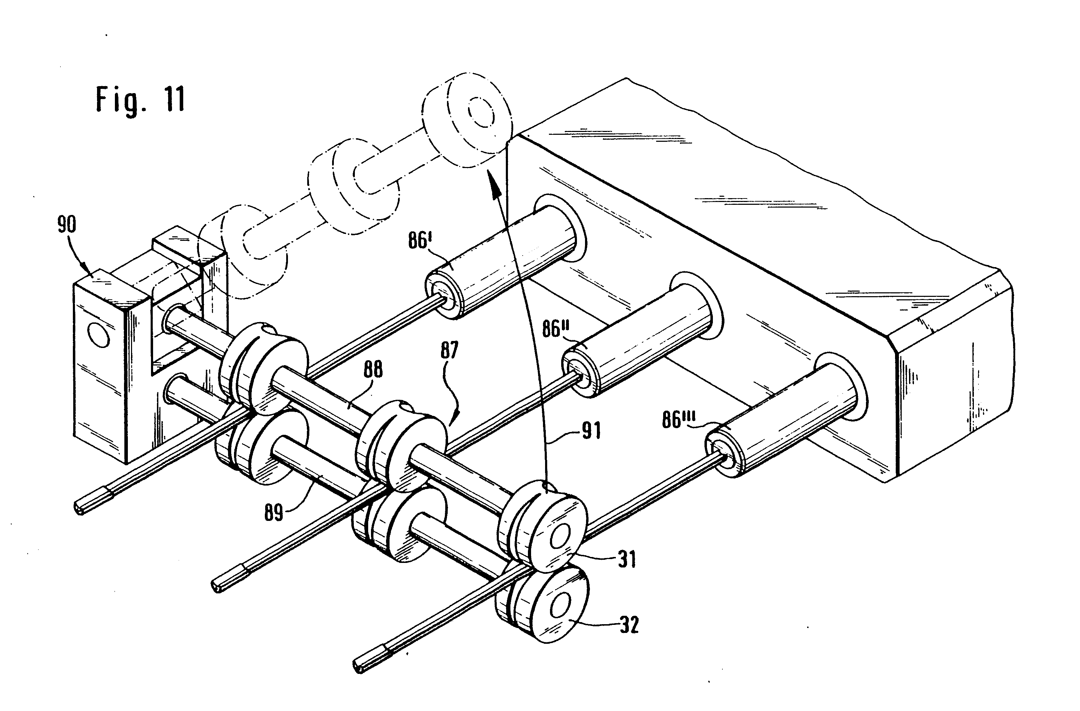

Figur 11 zeigt eine vertikale Anordnung der Führungsbacken 31, 32 einer Führungseinheit 87. Eine solche Anordnung ist für eine Mehrspindelanordnung und manuellem Werkzeugwechsel geeignet. Die Führungsbacken 31 sind auf einer gemeinsamen Welle 88, die Führungsbacken 32 auf einer gemeinsamen Welle 89 angeordnet. Beide Wellen 88, 89 sind in einem Steuergehäuse 90 angeordnet und zwar derart, daß sie von dort antreibbar sind. Das ergibt eine besonders einfache synchrone Verstellbarkeit der Führungseinrichtungen. Allerdings muß zum Werkzeugwechsel die Welle 88 in Richtung des Pfeiles 91 hochklappbar sein.

Figur 12 zeigt ein vereinfachtes Ausführungsbeispiel für weniger schwierige Anforderungen an die Führung eines Tiefbohrwerkzeuges. Die Führung des Schaftes 102 erfolgt durch nur eine vertikal angeordnete Führungsbacke 131 mit einer Nut 160, die den Schaft 102 nur halbkreisförmig, also mit einem Umfangswinkel von 180° umfaßt. Auch dabei ist ein stufenloses Einstellen des Führungsdurchmessers möglich.

**Ansprüche**

1. Führungseinrichtung für ein Tiefbohrwerkzeug (1) in einer Tiefbohrmaschine, mit einer den Schaft (2) des Tiefbohrwerkzeuges zumindest teilwiese umfassenden Führungsfläche. dadurch gekennzeichnet, daß die Führungseinrichtung durch mindestens eine verdrehbare mit ihrer Drehachse senkrecht zur Längserstreckung des Tiefbohrwerkzeugs (1) angeordnete Führungsbacke (31,32,131) gebildet wird, deren Außenfläche (51) zumindest entlang eines Teils ihres Umfangs eine in Umfangsrichtung laufende Nut (60,61,161) mit halbkreisförmigem Querschnitt aufweist, wobei der Durchmesser des Halbkreises sich in Umfangsrichtung ändert und eine Führungsfläche (43) mit von der Drehstellung der Führungsbacke (31,32,131) abhängigem Halbkreisdurchmesser für den tangential an der Halbkreifläche der Nut (60,61,161) anliegenden Schaft (2) des Tiefbohrwerkzeuges bildet.

2. Führungseinrichtung nach Anspruch 1, dadurch gekennzeichnet, daß die Führungseinrichtung durch zwei Führungsbacken (31,32) gebildet wird, deren Außenflächen (51) an einer Stelle aneinander anliegen und je eine Nut (60,61) aufweisen, wobei die Nuten (60,61) an der Stelle des Aneinanderliegens der Außenflächen (51) der Führungsbacken (31,32) zusammen eine Führungsöffnung (43) mit in Abhängigkeit von der Drehstellung der Führungsbacken (31,32) unterschiedlichem Durchmesser bilden.

3. Führungseinrichtung nach Anspruch 2, dadurch gekennzeichnet, daß die Außenflächen (51) der Führungsbacken (31,32) in einer bestimmten Drehstellung zusammen eine weitere in Richtung des Tiefbohrwerkzeugs verlaufende und mit diesem koaxiale Öffnung (45) aufweisen, durch die sich der Spannzylinder (5), der das Tiefbohrwerkzeug (1) aufnimmt, hindurch erstrecken kann.

4. Führungseinrichtung nach Anspruch 3, dadurch gekennzeichnet, daß die genannte weitere Öffnung (45) zumindest teilweise mit kreisförmigem Querschnitt (47) ausgebildet ist und eine Führungsöffnung (45) für den Spannzylinder (5) bildet.

5. Führungseinrichtung nach Anspruch 2 oder einem der folgenden, dadurch gekennzeichnet, daß die Außenflächen (51) der Führungsbacken (31,32) in einer weiteren bestimmten Drehstellung zusammen eine nach oben offene und nach unten durch Prall-und Dämpfungsflächen (41,42) abgeschlossene Ausnehmung (40) zur Aufnahme des Bohrkopfes (3) des Tiefbohrwerkzeuges (1) aufweisen.

6. Führungseinrichtung nach Anspruch 2 oder einem der folgenden, dadurch gekennzeichnet, daß beide Führungsbacken (31) je mit einem Zahnrad (33,34) versehen sind, die miteinander in Eingriff sind, und eines davon mit einem Stellmotor (112) gekoppelt ist.

7. Führungseinrichtung nach Anspruch 1 oder einem der folgenden, dadurch gekennzeichnet, daß die Führungsbacken (31,32,131) aus einem Kunststoff mit Lagereigenschaften, vorzugsweise aus Polyoxymethylen, gebildet sind.

8. Führungseinrichtung nach einem der Ansprüche 2 bis 7, dadurch gekennzeichnet, daß die beiden Führungsbacken (31,32) über ein gemeinsames Stellelement (72,77,78) drehverstellbar sind.

9. Führungseinrichtung nach Anspruch 2 oder einem der folgende, dadurch gekennzeichnet, daß mindestens zwei jeweils durch zwei Führungsbacken gebildete Einheiten (81,82) hintereinander angeordnet sind.

10. Führungseinrichtung nach Anspruch 2 oder einem der folgenden, dadurch gekennzeichnet, daß mindestens zwei durch zwei Führungsbacken (31,32) gebildete Einheiten (83,84,85) nebeneinander auf einer Platte (30') angeordnet sind.

11. Führungseinrichtung nach Anspruch 1 oder 2, dadurch gekennzeichnet, daß eine Führungseinheit (87) durch zwei Führungsbacken (31,32) gebildet wird, die in einer vertikalen Fläche und je auf einer Welle (88,89) angeordnet sind, wobei die eine Welle (88) aus der Arbeitsposition wegklappbar ist.

12. Verfahren zum Betrieb einer Führungseinrichtung nach Anspruch 2 oder einem der folgenden, dadurch gekennzeichnet, daß an beiden Führungsbacken (31,32) bei eingelegtem Schaft (2) eines Tiefbohrwerkzeuges in der Drehrichtung, die eine Verkleinerung des Durchmessers der Führungsöffnung (43) ergibt, ein bestimmtes einstellbares Drehmoment wirksam ist, das eine vorbestimmte Reibung zwischen Schaft (2) und Führungsfläche ergibt.

**Fig. 1**

0 280 862

# Fig. 2

# Fig. 3

Fig. 4a

0 280 862

Fig. 4b

7

6

5

4

2

1

32

34

31

8

8

33

3

8

0 280 862

Fig. 4c

0 280 862

Fig. 5a

40 1 2 4 5 48

32

31

2 42 41 49

Fig. 5b

5 50 51 43

32

31

2 61 60

Fig. 5c

1 2 4 5 46

32

31

47 45

0 280 862

Fig. 6a

Fig. 6b

Fig. 6c

Fig. 6d

Fig. 6e

**Fig. 7a**

9　10　31　33

**Fig. 7b**

10　9　III III　II　31　33　II

**Fig. 7c**

10　9　31　33

0 280 862

Fig. 8a

73    74    72

76    75

Fig. 8b

77

76    75

Fig. 8c

78

80

79

32    31

# Fig. 9

# Fig. 12

0 280 862

Fig. 10

83

86'

84

86''

86'''

85

30

0 280 862

Fig. 11